# EUROPÄISCHE PATENTSCHRIFT

(11) **EP 1 106 786 B1**
(45) Veröffentlichungstag und Bekanntmachung des Hinweises auf die Patenterteilung: **20.07.2005**
(21) Anmeldenummer: 00119906.6
(22) Anmeldetag: 13.09.2000
(51) Int. Cl.: F01D 17/10, F02C 9/18, F04D 27/02

(54) **Abblaseventil eines Verdichters, insbesondere für ein Zweistrahl-Flugtriebwerk**
Vent valve for a compressor, especially for a dual flux jet engine
Valve d'échappement de compresseur, notamment pour un moteur à réaction à double flux

(30) Priorität: 10.12.1999 DE 19959596
(43) Veröffentlichungstag der Anmeldung: 13.06.2001
(73) Patentinhaber: Rolls-Royce Deutschland Ltd & Co KG, 15827 Dahlewitz (DE)
(72) Erfinder: Negulescu, Dimitrie, 14163 Berlin (DE)
(74) Vertreter: Weber, Joachim, Dr.

(56) Entgegenhaltungen:
- EP-A- 0 174 255
- EP-A- 0 902 179
- US-A- 4 463 552
- US-A- 5 261 228

## Beschreibung

Die Erfindung betrifft ein Abblaseventil eines Verdichters, insbesondere für ein Zweistrahl-Flugtriebwerk, mit einer im Abblasekanal einem Ventilkörper nachgeschalteten Leiteinrichtung, die den aus einem Verdichterkanal abgezweigten Abblase-Luftstrom solchermaßen in einen Nebenstromkanal einleitet, daß die Strahlrichtung des Abblase-Luftstromes eine der im Nebenstromkanal geführten Luftströmung gleichgerichtete Komponente besitzt. Zum technischen Umfeld wird beispielshalber auf die US 4,463,552 oder die EP 0 902 179 A verwiesen.

Allgemein bekannt ist, daß in Verdichtern, insbesondere für Gase, sog. Abblaseventile vorgesehen sind, mit Hilfe derer vermieden werden kann, daß der Verdichter seine Pumpgrenze überschreitet, d.h. bedarfsweise wird ein Teil des im Verdichter komprimierten Gas- oder Luftstromes aus dem Verdichter abgeblasen, ohne sämtliche Verdichterstufen des mehrstufigen, insbesondere mehrstufigen Axial-Verdichters zu durchlaufen. Bei Zweistrahl-Flugtriebwerken wird der sog. Abblase-Luftstrom des Verdichters dabei in den sog. Nebenstromkanal eingeleitet, in welchem die vom Triebwerks-Fan geförderte Luftströmung geführt wird.

Bekannt sind einfache, mit sog. Auslaßtöpfen bestückte Abblaseventile, die den Abblase-Luftstrom im wesentlichen senkrecht zur Luftströmung im Nebenstromkanal in diesen einleiten. Die Auslaßbohrungen dieser Auslaßtöpfe stehen dabei senkrecht zur Wand des Nebenstromkanales. Da jedoch der Abblaseluftstrom sehr heiß sein kann, kann bei einem Ausfall des Abblaseventiles oder von dessen Steuerung, d.h. insbesondere dann, wenn das Abblaseventil für einen längeren Zeitraum geöffnet ist, der Nebenstromkanal bzw. dessen Kanalwand vom Abblase-Luftstrom beschädigt werden. Der aus dem Verdichter abgeblasene, ausströmende heiße Überschallstrahl hat dann auf die Struktur des Nebenstromkanals und auf die diesem naheligenden Komponenten eine schädliche Wirkung.

Mit einem aus der eingangs genannten US 4,463,552 bekannten Abblaseventil tritt diese schädliche Wirkung nurmehr verringert auf, da hier der Abblase-Luftstrom mittels einer im Abblasekanal des Abblaseventiles vorgesehenen Leiteinrichtung zumindest teilweise in Strömungsrichtung der im Nebenstromkanal geführten Luftströmung in diesen eingeleitet wird, jedoch sind noch weitere bzw. verstärkt wirkende Maßnahmen zur Abhilfe der geschilderten Problematik möglich, die aufzuzeigen sich die vorliegende Erfindung zur Aufgabe gestellt hat.
Die Lösung dieser Aufgabe ist dadurch gekennzeichnet, daß im Abblasekanal zwischen dem Ventilkörper und der Leiteinrichtung ein Dissipationssieb vorgesehen ist. Vorteilhafte Aus- und Weiterbildungen sind Inhalt der Unteransprüche.

Erfindungsgemäß ist zusätzlich zur Leiteinrichtung noch ein sog. Dissipationssieb vorgesehen, an welchem ein Teil der im Abblase-Luftstrom enthaltenen kinetischen Energie, d.h. ein Teil von dessen Impuls vernichtet wird. Durch dieses im Abblasekanal des Abblaseventiles vorgesehene, bevorzugt engmaschige Dissipationssieb (oder Dissipationsgitter oder dgl.) tritt der vom geöffneten Ventilkörper freigegebene Abblase-Luftstrom hindurch, ehe er über die Leiteinrichtung mit der gewünschten Strahlrichtung in den Nebenstromkanal gelangt. Aufgrund der Verwirbelung und intensiven Drosselung am sog. Dissipationssieb wird der Impuls des in den Nebenstromkanal eingeleiteten Abblase-Luftstromes so weit reduziert, daß er in diesem Kanal praktisch keine schädliche Wirkung mehr zeigen kann. Damit ergibt sich im Nebenstromkanal auch eine verbesserte Vermischung zwischen der in diesem geführten Luftströmung und dem eingeleitetn Abblase-Luftstrom, was grundsätzlich erwünscht ist.

Dabei kann es im Hinblick auf die Funktion der Leiteinrichtung vorteilhaft sein, zwischen dieser sowie dem Dissipationssieb einen sog. Beruhigungsraum vorzusehen, in dem die am Sieb (oder Gitter) hervorgerufenen Strömungswirbel teilweise abgebaut werden. Eine besonders vorteilhafte, da zusätzlich wie ein Sieb oder Gitter wirkende Leiteinrichtung ist in Anspruch 3 beschrieben, wonach die Leiteinrichtung in Form einer zur Wand des Nebenstromkanales im wesentlichen parallelen Platte ausgebildet ist, in der eine Vielzahl von mit ihrer Achse in Strömungsrichtung der im Nebenstromkanal geführten Luftströmung geneigten Bohrungen vorgesehen sind. Optimale Ergebnisse wurden dabei erzielt, wenn die Oberfläche der Leiteinrichtung im wesentlichen doppelt so groß ist wie diejenige des Dissipationssiebes, da dann die mögliche Durchsatzmenge des Abblaseventiles trotz der zusätzlichen Drosselung am Dissipationssieb nicht herabgesetzt wird.

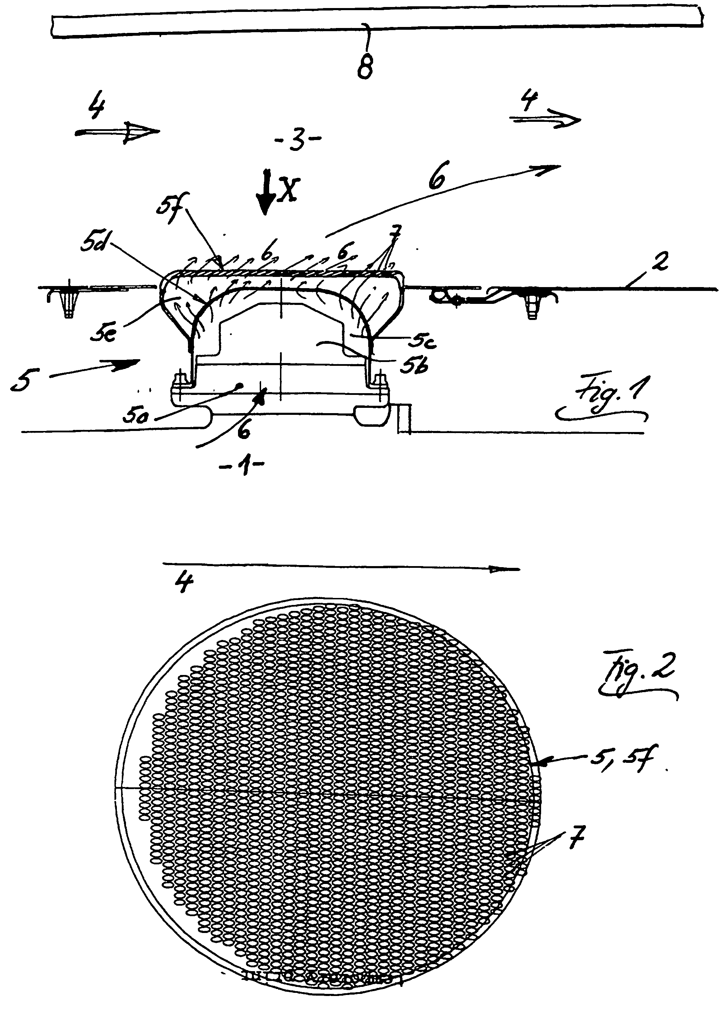

Im folgenden wird die Erfindung anhand eines bevorzugten Ausführungsbeispieles weiter erläutert, wobei die beigefügte **Figur 1** den Querschnitt eines erfindungsgemäßen Verdichter-Abblaseventiles im eingebauten Zustand (zwischen einem Verdichter-Ringraum und einem Nebenstromkanal) zeigt, von dem in **Figur 2** die Ansicht X aus Figur 1 dargestellt ist. Erfindungswesentlich können dabei sämtliche näher beschriebenen Merkmale sein.

Mit der Bezugsziffer 1 ist der Verdichterkanal bzw. Verdichter-Ringraum oder Strömungskanal eines nicht weiter dargestellten mehrstufigen Axial-Verdichters eines Flugtriebwerkes bezeichnet, zu dem parallel und von einer Trennwand 2 getrennt ein Nebenstromkanal 3 verläuft. In diesem Nebenstromkanal 3 wird die vom Fan des ansonsten üblichen Zweistrahl-Flugtriebwerkes geförderte Luftströmung 4 gemäß der angegebenen Pfeilrichtung geführt.

In der Trennwand 2 ist ein Abblaseventil 5 angeordnet, welches dazu dient, einen Teil des im Verdichter komprimierten und im Verdichterkanal 1 geführten Luftstromes als sog. Abblase-Luftstrom 6 aus dem Verdichterkanal 1 abzuleiten und in den Nebenstromkanal 3 einzuleiten, und zwar aus dem weiter oben beschriebenen Grund. In einem den Verdichterkanal 1 mit dem Nebenstromkanal 3 verbindenden Abblasekanal 5a des Abblaseventiles 5 ist ein den Strömungsquerschnitt dieses Abblasekanales 5a mehr oder weniger freigebender oder verschließender, üblicher und somit nicht detaillierter dargestellter Ventilkörper 5b vorgesehen. Bezüglich der Strömungsrichtung des Abblase-Luftstromes 6 stromab dieses Ventilkörpers 5b ist im Abblasekanal 5a ein erster Beruhigungsraum 5c vorgesehen, der von einem sog. Dissipationssieb 5d begrenzt wird. Durch dieses im wesentlichen engmaschige Dissipations-Sieb 5d muß der aus dem Verdichterkanal 1 abgeleitete Abblase-Luftstrom 6 hindurch treten, wonach er in einen zweiten Beruhigungsraum 5e gelangt, der weiterhin von einer im Abblasekanal 5a vorgesehenen Leiteinrichtung 5f begrenzt wird. Beim Durchströmen dieser Leiteinrichtung 5f wird dem Abblase-Luftstrom 6 eine Strahlrichtung aufgeprägt, die eine der im Nebenstromkanal 3 geführten Luftströmung 4 gleichgerichtete Komponente hat.

Wie **Figur 1** und insbesondere **Figur 2** zeigt, ist die Leiteinrichtung 5f in Form einer zur Trennwand 2, d.h. zur Wand des Nebenstromkanales 3 im wesentlichen parallelen Platte ausgebildet, in der eine Vielzahl von in Strömungsrichtung der im Nebenstromkanal 3 geführten Luftströmung 4 geneigten Bohrungen 7 vorgesehen sind. Der gemäß den Pfeilen 6 durch diese Bohrungen 7 bzw. durch die Leiteinrichtung 5f hindurchtretende Abblase-Luftstrom tritt somit nicht senkrecht zur Trennwand 2 in den Nebenstromkanal 3 ein, sondern ist bereits teilweise der darin geführten Luftströmung 4 gleichgerichtet. Bereits mit dieser Maßnahme wird verhindert, daß der heiße Überschall-Abblase-Luftstrom 6 praktisch frontal auf die äußere, zur Tennwand 2 porallele Begrenzungswand 8 des Nebenstromkanales 3 auftrifft, und diese bzw. deren Umgebung dadurch in Mitleidenschaft zieht.

Besonders vorteilhaft im Hinblick auf eine gewünschte Reduzierung der im Abblase-Luftstrom 6 enthaltenen Energie wirkt sich jedoch das Dissipationssieb 5d aus. An diesem Dissipationssieb 5d wird somit ein Teil des Impulses des Abblase-Luftstromes 6 vernichtet, so daß dieser im Nebenstromkanal 3 keinen Schaden anrichten kann

In anderen Worten ausgedrückt besitzt das gezeigte und beschriebene Abblaseventil 5 einen Auslaßtopf, der als Zweistufen-Dissipationstopf bezeichnet werden kann und doppelwandig ausgebildet ist, der nämlich aus dem Dissipationssieb 5d mit nachgeschaltetem Beruhigungsraum 5e und darauf folgender Leiteinrichtung 5f besteht. Wie ersichtlich hat die zweite Dissipationsstufe, nämlich die sog. Leiteinrichtung 5f eine Pilzform, während die erste Dissipationsstufe als Dissipationssieb 5d ausgebildet ist und im wesentlichen senkrecht zu seiner Oberfläche gebohrte Austrittsöffnungen (nicht näher bezeichnet) aufweist. Die Leiteinrichtung 5f bzw. die zweite Dissipationsstufe hingegen lenkt den Abblase-Luftstrom 6 um hier 60 Winkelgrade um, und zwar durch die hier um 30 Winkelgrade zur Trennwand 2 mit ihrer Längsachse nach hinten geneigten bzw. angestellten Bohrungen 7.

Um aufgrund dieser beiden Dissipationsmaßnahmen, nämlich der Leiteintichtung 5f sowie dem Dissipationssieb 5d die gesamte mögliche Durchflußmenge durch das Abblaseventil 5 nicht zu verringern, ist die Strömungsaustrittsfläche der zweiten Stufe, d.h. die Querschnittsfläche sämtlicher Bohrungen 7 der Leiteinrichtung 5f, in etwa doppelt so groß ausgelegt wie die Strömungsaustrittsfläche der ersten Stufe, nämlich des Dissipationssiebes 5d.

Der Vorteil des erfindungsgemäßen Abblaseventiles 5 besteht in der Stufung der Strahldissipation des Abblase-Luftstromes 6 in den hintereinander angeordneten sog. Dissipationstöpfen, d.h. Dissipationssieb 5d und Leiteinrichtung 5f, welche bei unverändertem Durchsatz (wird gewährleistet durch die die Pilzform des zweiten Dissipationstopfes, d.h der Leiteinrichtung 5f) eine fünfzigprozentige Reduzierung des Strahlimpulses gewährleisten, und welche gekoppelt mit der beschriebenen Umlenkung der Strahlrichtung von 60 Winkelgraden die vollständige Durchmischung des heißen Abblase-Luftstromes 6 in der kalten Luftströmung 4 des Nebenstromkanales 3 ermöglichen, und dadurch die schädliche Wirkung eines fehlerhaft offen gebliebenen Abblaseventils 5 ausschließen. Durch diese Durchmischung wird die Temperatur der an der Begrenzungswand 8 des Nebenstromkanales 3 angreifenden Luftstrahlen unter den zulässigen Materialwert gebracht, wobei noch darauf hingewiesen sei, daß selbstverständlich eine Vielzahl von Details insbesondere konstruktiver Art durchaus abweichend vom gezeigten Ausführungsbeispiel gestaltet sein kann, ohne den Inhalt der Patentansprüche zu verlassen.

### Bezugszeichenliste:

- 1: Verdichterkanal
- 2: Trennwand
- 3: Nebenstromkanal
- 4: Luftströmung in 3 (Pfeilrichtung)
- 5: Abblaseventil
- 5a: Abblasekanal
- 5b: Ventilkörper
- 5c: erster Beruhigungsraum
- 5d: Dissipationssieb
- 5e: zweiter Beruhigungsraum
- 5f: Leiteinrichtung
- 6: Abblase-Luftstrom
- 7: Bohrung
- 8: äußere Begrenzungswand (von 3)

## Patentansprüche

1. Abblaseventil eines Verdichters, insbesondere für ein Zweistrahl-Flugtriebwerk, mit einer im Abblasekanal (5a) einem Ventilkörper (5b) nachgeschalteten Leiteinrichtung (5f), die den aus einem Verdichterkanal (1) abgezweigten Abblase-Luftstrom (6) solchermaßen in einen Nebenstromkanal (3) einleitet, daß die Strahlrichtung des Abblase-Luftstromes (6) eine der im Nebenstromkanal (3) geführten Luftströmung (4) gleichgerichtete Komponente besitzt,
**dadurch gekennzeichnet, daß** im Abblasekanal (5a) zwischen dem Ventilkörper (5b) und der Leiteinrichtung (5f) ein Dissipationssieb (5d) vorgesehen ist.

2. Abblaseventil nach Anspruch 1,
**dadurch gekennzeichnet, daß** in Richtung des Abblase-Luftstromes (6) betrachtet stromab des Dissipationssiebes (5d) ein Beruhigungsraum (5e) vorgesehen ist.

3. Abblaseventil nach Anspruch 1 oder 2,
**dadurch gekennzeichnet, daß** die Leiteinrichtung (5f) in Form einer zur Wand (2, 8) des Nebenstromkanales (3) im wesentlichen parallelen Platte ausgebildet ist, in der eine Vielzahl von in Strömungsrichtung der im Nebenstromkanal geführten Luftströmung (4) geneigten Bohrungen (7) vorgesehen sind.

4. Abblaseventil nach einem der vorangegangenen Ansprüche,
**dadurch gekennzeichnet, daß** die Strömungsaustrittsfläche der Leiteinrichtung (5f) im wesentlichen doppelt so groß ist wie diejenige des Dissipationssiebes (5d).

## Claims

1. Bleed valve of a compressor, in particular for a dual flux aircraft engine, provided with a guiding device (5f) arranged downstream of a valve body (5b) in the bleed duct (5a), with said guiding device directing the bleed airflow (6) from the compressor duct (1) into a bypass duct (3) in such a manner that the direction of flow of the bleed airflow (6) has a component which is unidirectional with the airflow (4) carried in the bypass duct (3),
**characterized in that** a dissipation screen (5d) is provided in the bleed duct (5a) between the valve body (5b) and the guiding device (5f).

2. Bleed valve in accordance with Claim 1,
**characterized in that** an attenuation chamber (5e) is provided downstream of the dissipation screen (5d) as viewed in the direction of the bleed airflow (6)

3. Bleed valve in accordance with Claim 1 or 2,
charactenzed in that the guiding device (5f) is designed in the form of a plate which is essentially parallel to the wall (2, 8) of the bypass duct (3) and which contains a plurality of bores (7) which are inclined in the direction of flow of the airflow (4) carried in the bypass duct

4. Bleed valve in accordance with one of the preceding Claims,
**characterized in that** the flow exit area of the guiding device (5f) is essentially twice the flow exit area of the dissipation screen (5d).

## Revendications

1. Vanne de décharge d'un compresseur, notamment pour un moteur d'avion à double flux, avec un dispositif de guidage (5f) placé dans le canal de décharge (5a) en aval d'un corps de vanne (5b) et qui introduit dans un canal de flux secondaire (3) le flux d'air de décharge (6) prélevé dans un canal de compresseur (1) de telle manière que la direction du flux d'air de décharge (6) possède une composante onentée dans le même sens que le flux d'air (4) guidé dans le canal de flux secondaire (3),
**caractérisée en ce**
**qu'**un crible dissipateur (5d) est prévu dans le canal de décharge (5a) entre le corps de vanne (5b) et le dispositif de guidage (5f).

2. Vanne de décharge selon la revendication 1,
**caractérisée en ce**
**qu'**observée dans le sens du flux d'air de décharge (6) est prévue une chambre d'affaiblissement (5e) en aval du crible dissipateur (5d).

3. Vanne de décharge selon la revendication 1 ou 2,
**caractérisée en ce**
**que** le dispositif de guidage (5f) est formé par une plaque pour l'essentiel parallèle aux parois (2, 8) du canal de flux secondaire (3), dans laquelle est prévue une multitude d'orifices (7) inclinés dans le sens d'écoulement du flux d'air (4) guidé dans le canal de flux secondaire

4. Vanne de décharge selon une des revendications précédentes,
**caractérisée en ce**
**que** la superficie de la sortie de l'écoulement du dispositif de guidage (5f) est pour l'essentiel égale au double de celle du crible dissipateur (5d).
